# EUROPEAN PATENT APPLICATION

(11) **EP 3 992 593 A1**
(43) Date of publication of application: **04.05.2022**
(21) Application number: 20830759.5
(22) Date of filing: 24.03.2020
(51) Int. Cl.: G01G 19/387

(54) **COMBINED MEASUREMENT DEVICE**

(30) Priority: 25.06.2019 JP 2019117443
(71) Applicant: Ishida Co., Ltd., Kyoto 606-8392 (JP)
(72) Inventor: HASHIGUCHI, Nobuki, Ritto-shi, Shiga 520-3026 (JP); ISHIBASHI, Tsuyoshi, Ritto-shi, Shiga 520-3026 (JP)
(74) Representative: Gill Jennings & Every LLP
(86) International application number: PCT/JP2020/013101
(87) International publication number: WO 2020/261679

(57) **Abstract**

A combined measurement device 1 includes a transportation unit configured to transport an article A supplied from the outside, a hopper configured to temporarily store the article supplied from the transportation unit and discharge the article A, and an operation unit 20 configured to have an operation surface 22a displaying information pertaining to operations of the transportation unit and the hopper and receiving an operation from a worker. The operation unit 20 displays a screen pertaining to operations of one of the transportation unit and the hopper when a flick operation moving upward or rightward with respect to the operation surface 22a is received, and displays a screen pertaining to operations of the other of the transportation unit and the hopper when a flick operation moving downward or leftward with respect to the operation surface 22a is received.

## Description

### Technical Field

The present invention relates to a combined measurement device.

### Background Art

Regarding combined measurement devices in the related art, for example, a device disclosed in Patent Literature 1 is known. The combined measurement device according to Patent Literature 1 includes a transportation unit configured to transport an article supplied from the outside, a hopper configured to temporarily store the article supplied from the transportation unit and discharge the article, a display unit configured to display an operation screen showing details of an operation to be performed by the combined measurement device and a guidance screen guiding details of an operation in accordance with a procedure, and an operation unit configured to input details of an operation. In Patent Literature 1, the display unit and the operation unit are touch panels.

### Citation List

### Patent Literature

[Patent Literature 1] Japanese Unexamined Patent Publication No. 2003-316418

### Summary of Invention

### Technical Problem

As in the combined measurement devices in the related art, an operation of setting or the like pertaining to operations of the transportation unit or the hopper is performed by a worker using a touch panel or the like. In the combined measurement devices in the related art, setting or the like is performed by pressing a tab displayed on a screen to select an operation target. For improvement in operability by a worker, it is preferable for a worker to be able to more intuitively perform such an operation of setting or the like pertaining to operations of the combined measurement device.

An object of an aspect of the present invention is to provide a combined measurement device in which improvement in operability can be achieved.

### Solution to Problem

According to an aspect of the present invention, there is provided a combined measurement device including a transportation unit configured to transport an article supplied from the outside, a hopper configured to temporarily store the article supplied from the transportation unit and discharge the article, and an operation unit configured to have an operation surface displaying information pertaining to operations of the transportation unit and the hopper and receiving an operation from a worker. The operation unit displays a screen pertaining to operations of one of the transportation unit and the hopper when a flick operation moving upward or rightward with respect to the operation surface is received, and displays a screen pertaining to operations of the other of the transportation unit and the hopper when a flick operation moving downward or leftward with respect to the operation surface is received.

In the combined measurement device according to the aspect of the present invention, the operation unit displays a screen pertaining to operations of one of the transportation unit and the hopper when a flick operation moving upward or rightward with respect to the operation surface is received, and displays a screen pertaining to operations of the other of the transportation unit and the hopper when a flick operation moving downward or leftward with respect to the operation surface is received. In this constitution, for example, when a setting or operating state of the transportation unit is checked, for example, a worker performs a flick operation moving upward on the operation surface. The operation unit in which this flick operation is performed displays a screen showing a setting or operating state of the transportation unit. In this manner, in the combined measurement device, a worker can intuitively perform an operation by associating a moving direction of a flick operation with each unit of the combined measurement device. Therefore, in the combined measurement device, improvement in operability is achieved.

In the embodiment, the operation unit may display a screen pertaining to operations of the transportation unit or the hopper in accordance with the flick operation when the flick operation is received on a main screen set in advance. The main screen may be a screen for starting an operation pertaining to setting or the like. In the combined measurement device, display is changed in accordance with a flick operation received on the main screen. Accordingly, in the combined measurement device, the operation unit can display a screen having details intended by a worker. Therefore, in the combined measurement device, a worker can intuitively perform an operation.

In the embodiment, the operation unit may perform display of a plurality of regions in a divided manner regarding the transportation unit and the hopper and receive an operation of selecting each of the plurality of regions, and may display a screen pertaining to operations of the transportation unit or the hopper corresponding to the selected region when a flick operation is received on the operation surface. In this constitution, only information of a part for which a worker desires to perform setting or the like can be displayed. Therefore, in the combined measurement device, better improvement in operability is achieved.

In the embodiment, the operation unit may display a screen pertaining to operations of one of the transportation unit and the hopper when a flick operation moving upward with respect to the operation surface is received, and may display a screen pertaining to operations of the other of the transportation unit and the hopper when a flick operation moving downward with respect to the operation surface is received. In the combined measurement device, the transportation unit and the hopper are disposed in an upward-downward direction. For this reason, in the combined measurement device, since display of the screen is changed by a flick operation in the upward-downward direction, a worker can more intuitively perform an operation.

In the embodiment, the operation unit may display a screen for setting parameters pertaining to operations of the transportation unit and the hopper. In this constitution, improvement in operability of setting the parameters is achieved.

### Advantageous Effects of Invention

According to the aspect of the present invention, improvement in operability is achieved.

### Brief Description of Drawings

FIG. 1 is a diagram of a constitution of a combined measurement device according to an embodiment.
FIG. 2 is a view illustrating a constitution of an operation unit.
FIG. 3 is an explanatory view of a flick operation in the operation unit.
FIG. 4 is a view illustrating a main screen of the operation unit.
FIG. 5(a) is a view illustrating the main screen, and FIG. 5(b) is a view illustrating an adjustment screen.
FIG. 6(a) is a view illustrating the main screen, and FIG. 6(b) is a view illustrating the adjustment screen.
FIG. 7(a) is a view illustrating the main screen, and FIG. 7(b) is a view illustrating a comprehensive display screen.
FIG. 8(a) is a view illustrating the main screen, and FIG. 8(b) is a view illustrating a preset screen.

### Description of Embodiment

Hereinafter, a preferable embodiment of the present invention will be described in detail with reference to the accompanying drawings. In the description of the drawings, the same reference signs are applied to the same or corresponding elements, and duplicate description will be omitted.

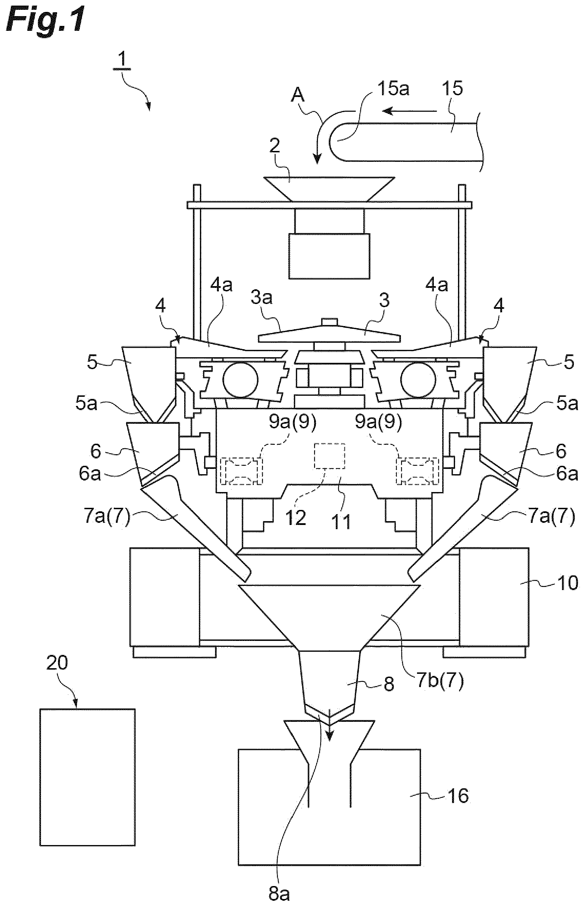

As illustrated in FIG. 1, a combined measurement device 1 includes a charging chute 2, a dispersion feeder (transportation unit) 3, a plurality of radial feeders (transportation units) 4, a plurality of pool hoppers 5, a plurality of measurement hoppers 6, a collecting chute 7, a timing hopper 8, and a measurement unit 9. The combined measurement device 1 includes an operation unit 20.

The combined measurement device 1 measures an article A (an article having an uneven unit mass, such as an agricultural product, an aquatic product, processed food, or the like) supplied by a transportation conveyor 15 such that it has a target measurement value and supplies the article A to a bag-making packing machine 16. The bag-making packing machine 16 forms a film into a bag having a predetermined capacity and packs the article A measured and supplied by the combined measurement device 1.

The charging chute 2 is disposed below a transportation end 15a of the transportation conveyor 15. The charging chute 2 receives the article A, which has been transported by the transportation conveyor 15 from the outside and has fallen from the transportation end 15a of the transportation conveyor 15, and discharges it downward.

The dispersion feeder 3 is disposed below the charging chute 2. The dispersion feeder 3 has a conical transportation surface 3a which is widened downward toward the end thereof. In the dispersion feeder 3, when the transportation surface 3a vibrates, the article A discharged from the charging chute 2 to an apex part of the transportation surface 3a is uniformly transported toward an outer edge of the transportation surface 3a.

The plurality of radial feeders 4 are disposed radially along the outer edge of the transportation surface 3a of the dispersion feeder 3. Each of the radial feeders 4 has a trough (transportation unit) 4a extending outward from below the outer edge of the transportation surface 3a. When each of the radial feeders 4 vibrates, the article A discharged from the outer edge of the transportation surface 3a is transported toward a tip part of the trough 4a.

For example, the plurality of pool hoppers 5 are disposed such that a center line (not illustrated) parallel to a vertical direction is surrounded. Each of the pool hoppers 5 is disposed below the tip part of the trough 4a of each of the radial feeders 4. Each of the pool hoppers 5 has a gate 5a which can be opened and closed with respect to a bottom part thereof. Each of the pool hoppers 5 temporarily retains (stores) the article A discharged from the corresponding radial feeder 4 by closing the gate 5a. Moreover, each of the pool hoppers 5 discharges the temporarily retained article A downward by opening the gate 5a.

For example, the plurality of measurement hoppers 6 are disposed such that the above-mentioned center line is surrounded. Each of the measurement hoppers 6 is disposed below the gate 5a of each of the pool hoppers 5. Each of the measurement hoppers 6 has a gate 6a which can be opened and closed with respect to a bottom part thereof. Each of the measurement hoppers 6 temporarily retains the article A discharged from the corresponding pool hopper 5 by closing the gate 6a. Moreover, each of the measurement hoppers 6 discharges the temporarily retained article A downward by opening the gate 6a.

The collecting chute 7 collects the article A discharged from each of the measurement hoppers 6. The collecting chute 7 has an upper stage chute unit 7a and a lower stage chute unit 7b. The upper stage chute unit 7a receives the article A discharged from each of the measurement hoppers 6 and causes the article A to slide to the lower stage chute unit 7b side. The lower stage chute unit 7b is a tubular body having a truncated cone shape tapered downward. The lower stage chute unit 7b discharges the article A to the timing hopper 8.

The timing hopper 8 is disposed below the collecting chute 7. The timing hopper 8 has a gate 8a which can be opened and closed with respect to a bottom part thereof. The timing hopper 8 temporarily retains the article A discharged from the collecting chute 7 by closing the gate 8a. Moreover, the timing hopper 8 discharges the temporarily retained article A to the bag-making packing machine 16 by opening the gate 8a.

The charging chute 2, the dispersion feeder 3, the plurality of radial feeders 4, the plurality of pool hoppers 5, and the plurality of measurement hoppers 6 are directly or indirectly supported by a support body 11. The collecting chute 7 and the timing hopper 8 are directly or indirectly supported by a frame 10.

The measurement unit 9 is accommodated inside the support body 11 supported by the frame 10. The measurement unit 9 has a plurality of load cells 9a. Each of the load cells 9a supports the corresponding measurement hopper 6. The measurement unit 9 measures a measurement value according to a mass of the article A when the article A is temporarily retained in each of the measurement hoppers 6.

A control unit 12 is disposed inside the support body 11. The control unit 12 has a central processing unit (CPU), a read only memory (ROM), a random access memory (RAM), and the like. The control unit 12 controls operations of each unit of the combined measurement device 1, such as transportation operations of the dispersion feeder 3 and the radial feeders 4, opening/closing operations of the gate 5a of each of the pool hoppers 5, opening/closing operations of the gate 6a of each of the measurement hoppers 6, and opening/closing operations of the gate 8a of the timing hopper 8.

The control unit 12 stores the measurement value measured by the measurement unit 9 and the measurement hopper 6 retaining the article A corresponding to the measurement value in association with each other. The control unit 12 calculates and selects a combination of the measurement values from a plurality of measurement values which are measured by the measurement unit 9 and associated with each of the measurement hoppers 6 such that the total value becomes the target measurement value (target value). More specifically, the control unit 12 selects a combination of the measurement values from a plurality of measurement values output by the measurement unit 9 such that the total value is settled within a predetermined range having the target measurement value as a lower limit value. Further, the control unit 12 discharges the article A to the measurement hopper 6 corresponding to the combination.

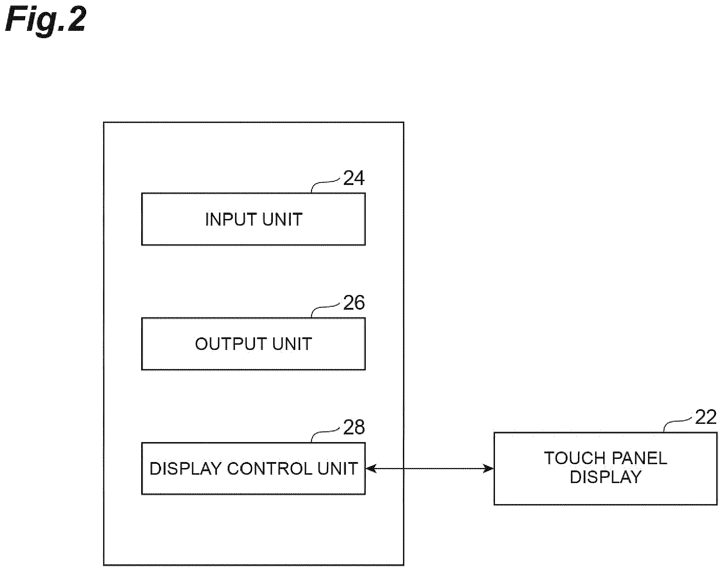

The operation unit 20 is an interface such as a display device or a tablet terminal. As illustrated in FIG. 2, the operation unit 20 has a touch panel display 22. For example, the touch panel display 22 is constituted of an electrostatic capacitance-type touch panel. The touch panel display 22 has an operation surface 22a.

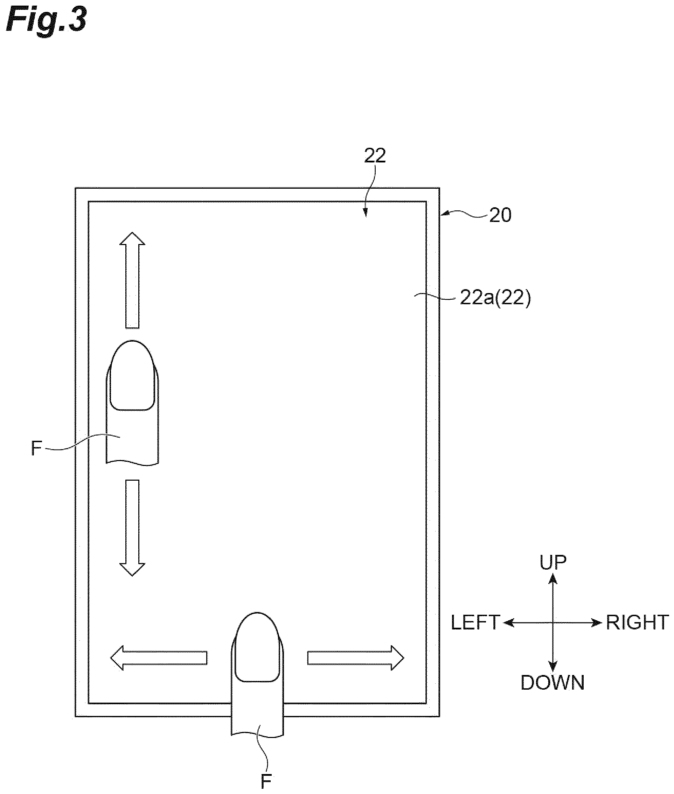

The operation surface 22a receives an input from a worker. The operation unit 20 receives an input, such as a tapping operation, a long-press operation, a drag operation (swipe operation), and a flick operation. As illustrated in FIG. 3, a flick operation is a method of scrolling a screen that continues for a certain period of time even after a finger F is released on the basis of an operation in which after the finger F touches the operation surface 22a, the finger F moves quickly while maintaining the touching state of the finger F and the finger F is released from the operation surface 22a in the middle of moving the finger F. In a flick operation, an operation of moving the finger F may be performed in an upward direction, a downward direction, a rightward direction, and a leftward direction with respect to the operation surface 22a.

As illustrated in FIG. 2, the operation unit 20 has an input unit 24, an output unit 26, and a display control unit 28. The input unit 24 inputs information pertaining to the dispersion feeder 3, the plurality of radial feeders 4, the plurality of pool hoppers 5, the plurality of measurement hoppers 6, and the timing hopper 8. The information includes operation information or the like pertaining to an operating condition of each unit. The input unit 24 inputs various kinds of information output from the control unit 12. The output unit 26 outputs setting information or the like set in the operation unit 20 to the control unit 12. The input unit 24 and the output unit 26 can communicate with the control unit 12.

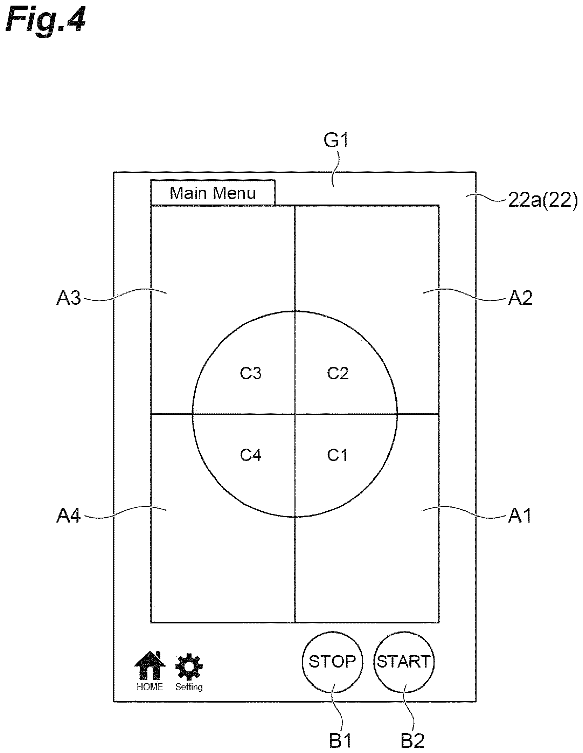

The display control unit 28 controls display of the screen in the touch panel display 22. The display control unit 28 has a CPU, a ROM, a RAM, and the like. As illustrated in FIG. 4, the display control unit 28 causes the touch panel display 22 to display a main screen G1. The main screen G1 is a screen displayed to perform management and setting (adjustment) of the combined measurement device 1 and is a screen set in advance. The main screen G1 displays a "STOP" button B1 for stopping operations of the combined measurement device 1 and a "START" button B2 for starting operations of the combined measurement device 1. In addition, the main screen G1 displays "a home button", "a setting button", and the like. When the home button is pressed, the display control unit 28 displays the main screen G1.

The operation unit 20 has the main screen G1 as a default screen and displays various kinds of screens in accordance with a flick operation. The main screen G1 displays four channels (a plurality of regions) C1, C2, C3, and C4. The main screen G1 displays the combined measurement device 1 in a manner of being divided into four channels C1 to C4 in a state in which the combined measurement device 1 is viewed in the vertical direction. On the main screen G1, the screen is divided into four areas A1, A2, A3, and A4 corresponding to the four channels C1 to C4. A setting range of each of the channels C1 to C4 can be arbitrarily set.

On the main screen G1, one or a plurality of channels C1 to C4 can be selected. Each of the channels C1 to C4 is selected by a tapping operation in the touch panel display 22. When the channels C1 to C4 are selected, the display control unit 28 changes colors of the areas A1 to A4 corresponding to the selected channels C1 to C4, for example.

The display control unit 28 changes display of the screen in accordance with a flick operation. Each of the screens is set with respect to a moving direction of a flick operation. The display control unit 28 causes the touch panel display 22 to display a screen associated with the moving direction of a flick operation in accordance with the moving direction of a flick operation.

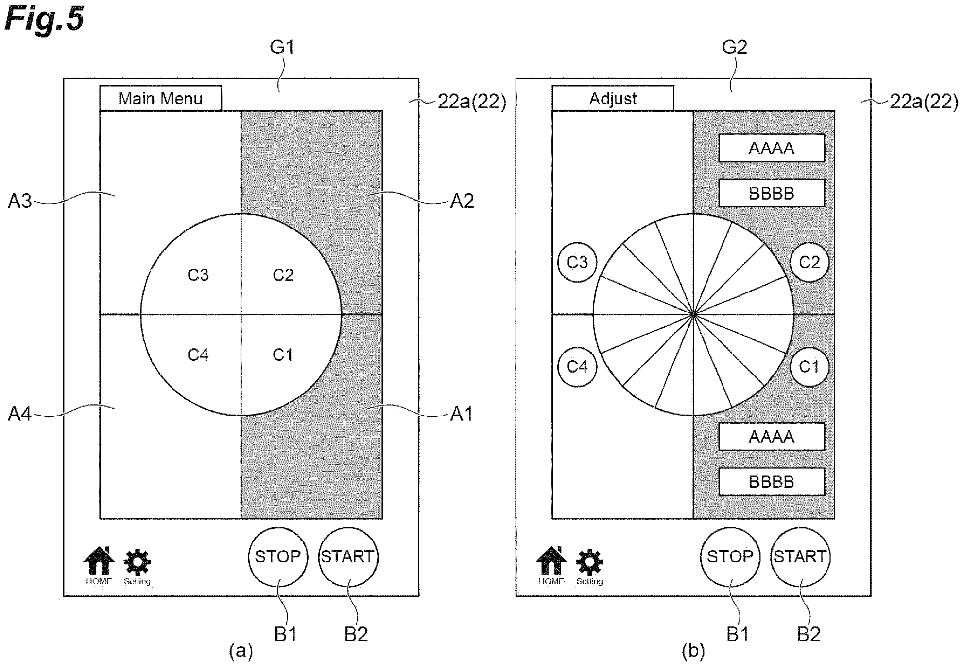

In the present embodiment, when a flick operation moving upward is performed on the main screen G1 illustrated in FIG. 5(a), the display control unit 28 displays an adjustment screen G2 illustrated in FIG. 5(b). That is, the adjustment screen G2 is set with respect to a flick operation moving upward on the main screen G1. The adjustment screen G2 is a screen pertaining to operations of the dispersion feeder 3 and the radial feeders 4 and is a screen for adjusting (setting) the dispersion feeder 3 and the radial feeders 4. As illustrated in FIG. 5(a), the channel C1 and the channel C2 are selected on the main screen G1. For this reason, as illustrated in FIG. 5(b), the display control unit 28 displays adjustment items and/or the operating conditions ("AAAA", "BBBB", and the like) of the channel C1 and the channel C2 on the adjustment screen G2. For example, the adjustment items are items for adjusting parameters, such as a vibration time and a vibration strength. When a flick operation moving downward is performed on the adjustment screen G2 illustrated in FIG. 5(b), the display control unit 28 displays the main screen G1 illustrated in FIG. 5(a).

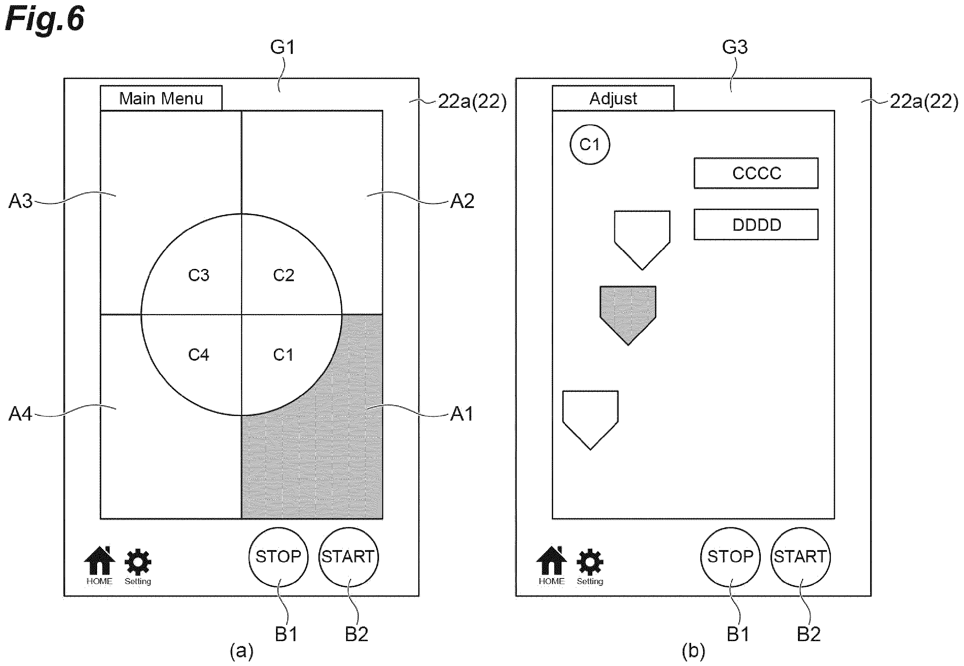

When a flick operation moving downward is performed on the main screen G1 illustrated in FIG. 6(a), the display control unit 28 displays an adjustment screen G3 illustrated in FIG. 6(b). That is, the adjustment screen G3 is set with respect to a flick operation moving downward on the main screen G1. The adjustment screen G3 is a screen pertaining to operations of the pool hoppers 5, the measurement hoppers 6, and the timing hopper 8 and is a screen for adjusting the pool hoppers 5, the measurement hoppers 6, and the timing hopper 8. As illustrated in FIG. 6(a), the channel C1 is selected on the main screen G1. For this reason, as illustrated in FIG. 6(b), the display control unit 28 displays adjustment items and/or the operating conditions ("CCCC", "DDDD", and the like) of the channel C1 on the adjustment screen G2. For example, the adjustment items are items for adjusting parameters, such as a timing of opening the hoppers.

A hopper can be selected on the adjustment screen G3. The adjustment screen G3 displays three hoppers. Three hoppers correspond to the pool hopper 5, the measurement hopper 6, and the timing hopper 8 sequentially from above according to the constitution of the combined measurement device 1. In FIG. 6(b), the measurement hopper 6 is selected. The display control unit 28 displays the adjustment items and/or the operating conditions corresponding to the selected hopper. When a flick operation moving upward is performed on the adjustment screen G3 illustrated FIG. 6(b), the display control unit 28 displays the main screen G1 illustrated in FIG. 6(a).

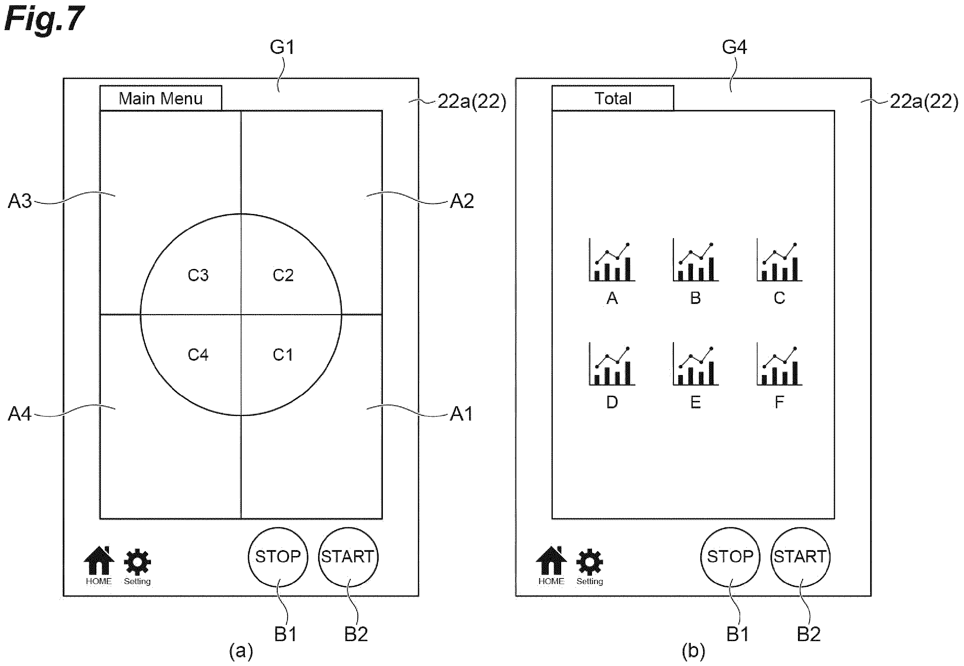

When a flick operation moving rightward is performed on the main screen G1 illustrated in FIG. 7(a), the display control unit 28 displays a comprehensive display screen G4 illustrated in FIG. 7(b). That is, the comprehensive display screen G4 is set with respect to a flick operation moving rightward on the main screen G1. The comprehensive display screen G4 displays an operating state, logs, and the like of the combined measurement device 1. When a flick operation moving leftward is performed on the comprehensive display screen G4 illustrated in FIG. 7(b), the display control unit 28 displays the main screen G1 illustrated in FIG. 7(a).

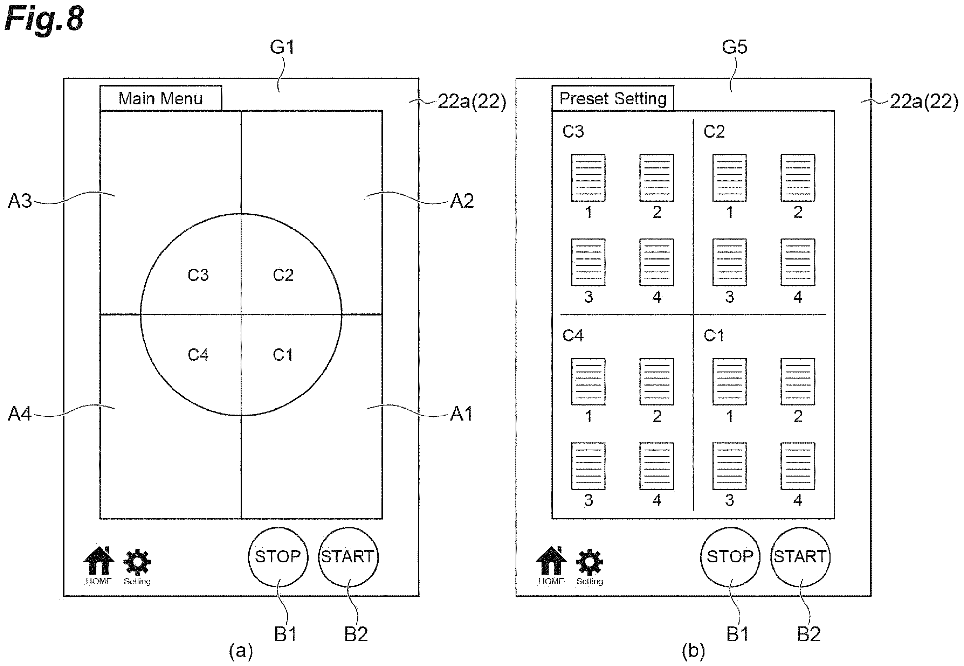

When a flick operation moving leftward is performed on the main screen G1 illustrated in FIG. 8(a), the display control unit 28 displays a preset screen G5 illustrated in FIG. 8(b). That is, the preset screen G5 is set with respect to a flick operation moving leftward on the main screen G1. The preset screen G5 displays preset items of each of the channels C1 to C4. When a flick operation moving rightward is performed in the preset screen G5 illustrated in FIG. 8(b), the display control unit 28 displays the main screen G1 illustrated in FIG. 8(a).

The display control unit 28 outputs setting information showing details of setting, such as the parameters or the like input on the adjustment screens G2 and G3 to the output unit 26. The output unit 26 outputs setting information to the control unit 12. The control unit 12 controls operations of the dispersion feeder 3, the plurality of radial feeders 4, the plurality of pool hoppers 5, the plurality of measurement hoppers 6, and the timing hopper 8 in accordance with the setting information.

As described above, in the combined measurement device 1 according to the present embodiment, the operation unit 20 displays a screen pertaining to operations of the dispersion feeder 3 and the plurality of radial feeders 4 when a flick operation moving upward with respect to the operation surface 22a is received and displays a screen pertaining to operations of the plurality of pool hoppers 5, the plurality of measurement hoppers 6, and the timing hopper 8 when a flick operation moving downward with respect to the operation surface 22a is received. In this constitution, when a setting or operating state of the radial feeder 4 is checked, for example, a worker performs a flick operation moving upward on the operation surface 22a. The operation unit 20 in which this flick operation is performed displays a screen showing a setting or operating state of the radial feeder 4. In this manner, in the combined measurement device 1, a worker can intuitively perform an operation by associating the moving direction of a flick operation with each unit of the combined measurement device 1. Particularly, in the combined measurement device 1, the dispersion feeder 3, the plurality of radial feeders 4, the plurality of pool hoppers 5, the plurality of measurement hoppers 6, the timing hopper 8 are disposed in an upward-downward direction. In this constitution, in the combined measurement device 1, since display of the screen is changed by a flick operation in the upward-downward direction, a worker can intuitively perform an operation. Therefore, in the combined measurement device 1, improvement in operability is achieved.

In the combined measurement device 1 according to the present embodiment, when a flick operation is received on the main screen G1 set in advance, the operation unit 20 displays a screen showing information pertaining to operations of the dispersion feeder 3 and the plurality of radial feeders 4, or the plurality of pool hoppers 5, the plurality of measurement hoppers 6, and the timing hopper 8 in accordance with the flick operation. The main screen G1 may be a screen for startingan operation pertaining to setting or the like. In the operation unit 20, display is changed in accordance with a flick operation received on the main screen G1. Accordingly, the operation unit 20 can display a screen having details intended by a worker. Therefore, in the combined measurement device 1, a worker can intuitively perform an operation.

In the combined measurement device 1 according to the present embodiment, the operation unit 20 performs display of the plurality of channels C1 to C4 in a divided manner regarding the dispersion feeder 3, the plurality of radial feeders 4, the plurality of pool hoppers 5, the plurality of measurement hoppers 6, and the timing hopper 8 and receives an operation of selecting each of the plurality of channels C1 to C4. The operation unit 20 displays a screen pertaining to operations of the dispersion feeder 3 and the plurality of radial feeders 4, or the plurality of pool hoppers 5, the plurality of measurement hoppers 6, and the timing hopper 8 corresponding to the selected channels C1 to C4 when a flick operation is received on the operation surface 22a. In this constitution, only information of a part for which a worker desires to perform setting or the like can be displayed. Therefore, in the combined measurement device 1, better improvement in operability is achieved.

Hereinabove, an embodiment of the present invention has been described but the present invention is not necessarily limited to the embodiment described above, and various changes can be made within a range not departing from the gist thereof.

In the foregoing embodiment, an aspect in which the display control unit 28 displays the adjustment screen G2 when a flick operation moving upward is performed on the main screen G1 has been described as an example. However, the adjustment screen G2 may be displayed when a flick operation moving downward on the main screen G1 is performed. In this case, the adjustment screen G3 may be displayed when a flick operation moving upward on the main screen G1 is performed. In addition, the adjustment screen G2 may be displayed when a flick operation moving either rightward or leftward on the main screen G1 is performed. In this case, the adjustment screen G3 may be displayed when a flick operation moving either rightward or leftward on the main screen G1 is performed. The moving direction of a flick operation for displaying each of the screens may be suitably set. In brief, the operation unit 20 may display a screen pertaining to operations of one of the transportation unit (the dispersion feeder 3 or the radial feeder 4) and the hopper (the pool hopper 5, the measurement hopper 6, or the timing hopper 8) when a flick operation moving upward or rightward with respect to the operation surface 22a is received and may display a screen pertaining to operations of the other of the transportation unit and the hopper when a flick operation moving downward or leftward with respect to the operation surface 22a is received.

In addition, the display control unit 28 may display a predetermined screen when a flick operation moving rightward or leftward on the adjustment screens G2 and G3 is performed. The display control unit 28 may display a predetermined screen when a flick operation moving upward or downward on the comprehensive display screen G4 or the preset screen G5 is performed.

In the foregoing embodiment, an aspect in which display of the screen is changed with respect to a flick operation on the main screen G1 has been described as an example. However, change of display of various kinds of screens may be set with respect to a flick operation on a screen other than the main screen G1.

In the foregoing embodiment, an aspect in which the dispersion feeder 3 transports the article A by means of vibration has been described as an example. However, the dispersion feeder 3 may transport the article A by means of rotation of the transportation surface 3a.

In the foregoing embodiment, an aspect in which the radial feeders 4 transport the article A by means of vibration has been described as an example. However, an aspect in which the radial feeders 4 transport the article A by means of a coil unit (a screw) which can be rotatively driven or a belt conveyor. In the case of a coil unit, the control unit 12 controls a rotation frequency (rpm) or the like of a coil unit for a transportation force. In addition, in the case of a belt conveyor, the control unit 12 controls a rotation frequency or the like of a roller driving a belt.

### Reference Signs List

1 Combined measurement device
3 Dispersion feeder (transportation unit)
4 Radial feeder (transportation unit)
5 Pool hopper (hopper)
6 Measurement hopper (hopper)
8 Timing hopper (hopper)
20 Operation unit
22a Operation surface
A Article
C1 to C4 Channel (region)

## Claims

1. A combined measurement device comprising:
a transportation unit configured to transport an article supplied from the outside;
a hopper configured to temporarily store the article supplied from the transportation unit and discharge the article; and
an operation unit configured to have an operation surface displaying information pertaining to operations of the transportation unit and the hopper and receiving an operation from a worker,
wherein the operation unit
displays a screen pertaining to operations of one of the transportation unit and the hopper when a flick operation moving upward or rightward with respect to the operation surface is received, and
displays a screen pertaining to operations of the other of the transportation unit and the hopper when a flick operation moving downward or leftward with respect to the operation surface is received.

2. The combined measurement device according to claim 1,
wherein the operation unit displays a screen pertaining to operations of the transportation unit or the hopper in accordance with the flick operation when the flick operation is received on a main screen set in advance.

3. The combined measurement device according to claim 1 or 2,
wherein the operation unit
performs display of a plurality of regions in a divided manner regarding the transportation unit and the hopper and receives an operation of selecting each of the plurality of regions, and
displays a screen pertaining to operations of the transportation unit or the hopper corresponding to the selected region when a flick operation is received on the operation surface.

4. The combined measurement device according to any one of claims 1 to 3,
wherein the operation unit
displays a screen pertaining to operations of one of the transportation unit and the hopper when a flick operation moving upward with respect to the operation surface is received, and
displays a screen pertaining to operations of the other of the transportation unit and the hopper when a flick operation moving downward with respect to the operation surface is received.

5. The combined measurement device according to any one of claims 1 to 4,
wherein the operation unit displays a screen for setting parameters pertaining to operations of the transportation unit and the hopper.
